# EUROPEAN PATENT APPLICATION

(11) **EP 1 741 753 A1**
(43) Date of publication of application: **10.01.2007**
(21) Application number: 05728792.2
(22) Date of filing: 06.04.2005
(51) Int. Cl.: C08L 77/00, C08K 3/00, C08K 5/3492, C08K 5/5313

(54) **FLAME-RETARDANT RESIN COMPOSITION**

(30) Priority: 28.04.2004 JP 2004132775
(71) Applicant: Ube Industries, Ltd., Ube-shi, Yamaguchi-ken 755-8633 (JP)
(72) Inventor: URATA, Yoshihiro c/o Ube Chem. fact., Ube Ind.,Ltd, Yamaguchi 755-8633 (JP); YASUI, Tetsuya c/o Ube chem. Fact., Ube Ind.,Ltd., Yamaguchi 755-8633 (JP)
(74) Representative: Grünecker, Kinkeldey, Stockmair & Schwanhäusser Anwaltssozietät
(86) International application number: PCT/JP2005/006758
(87) International publication number: WO 2005/105923

(57) **Abstract**

There is provided a flame-retardant resin composition which is excellent in flame retardancy and excellent in low water-absorbing property and exhibits a small dimensional change and a small decrease in insulating properties.

A flame-retardant resin composition containing:
(A) an aliphatic polyamide resin;
(B) an aromatic polyamide resin;
(C) a flame retardant containing (c1) a phosphinic acid salt represented by the following formula (I) and/or (c2) a diphosphinic acid salt represented by the following formula (II) and/or a polymer containing at least one of these (c1) and (c2) as a component C1 and containing (c3) a melamine condensation product and/or (c4) a reaction product of melamine with phosphoric acid and/or (c5) a reaction product of a melamine condensation product with phosphoric acid and/or a mixture containing at least two of these (c3) to (c5) as a component C2; and
(D) an inorganic filler.

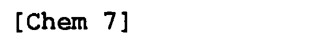

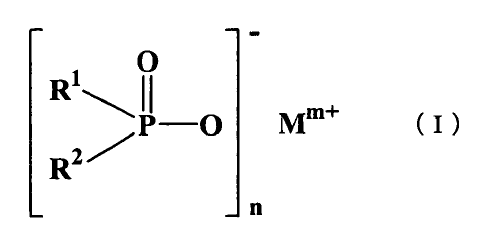

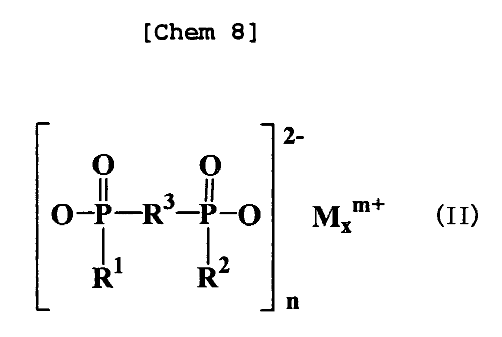

## Description

### Technical Field

The present invention relates to a flame-retardant resin composition which is excellent in flame retardancy and excellent in low water-absorbing property and exhibits a small dimensional change and a small decrease in insulating properties.

### Background Art

Reinforced flame retardant polyamide resins wherein inorganic fillers are added to flame retardant polyamide resins have widely been used as electrical parts such as power breakers, electromagnetic switches, wiring connectors, and power tools owing to their excellent mechanical properties.
As the flame retardant polyamide resins, there have been employed those wherein triazine-based compounds, halogen compounds, magnesium hydroxide, or red phosphorus are mixed as flame retardants but each has problem(s).

The resin compositions containing triazine compounds such as melamine cyanurate cannot suppress generation of ammonia gas, amine-based gases, cyan gas, and the like at processing or in case of fire. Moreover, for these compounds, difficulty of realizing a sufficient flame retardant effect in reinforced polyamide compositions and a low decomposition temperature are enumerated as defects (see Patent Document 1 for melamine cyanurate and Patent Document 2 for melem).
The resin compositions to which halogen compounds are mixed have problems that corrosive decomposition gases may be generated during molding and processing to corrode molding machines and metal molds, and harmful substances may be generated during incineration to contaminate the environment.
Magnesium hydroxide is a non-toxic non-halogen flame retardant and induces no problems of toxic gases and corrosion of processing machines, and the like. However, in order to realize a sufficient flame retardancy, addition of a large amount of the compound is necessary but when a large amount is added, there arises a problem of decreased mechanical properties such as strength and impact-resistance. Moreover, it is also difficult to obtain a good appearance of molded articles.
The resin compositions to which red phosphorus is mixed may possibly generate a toxic phosphine gas through decomposition of red phosphorus during molding and processing and hence are not preferred in view of safety.

Furthermore, there have been also proposed a flame retardant combination of (i) a phosphinic acid salt and (ii) melamine or a melamine compound, e.g., melamine cyanurate or melamine phosphate (see Patent Document 3) and a flame retardant combination of (iii) a phosphinic acid salt and (iva) a melamine condensation product or (ivb) a reaction product of melamine or a melamine condensation product with phosphoric acid (see Patent Document 4).
The flame retardancy is improved by mixing these flame retardant combinations. On the other hand, when an olefinic alloy is further mixed for the purpose of improving the water-absorbing property of the polyamide resin, there arises a problem of decreased flame retardancy.

Patent Document 1: JP-A-53-31759
Patent Document 2: JP-A-58-45352
Patent Document 3: JP-T-2000-508365
Patent Document 4: JP-A-2001-72978

### Disclosure of the Invention

### Problems that the Invention is to Solve

An object of the invention is to solve the above problems and provide a flame-retardant resin composition which is excellent in flame retardancy and excellent in low water-absorbing property and exhibits a small dimensional change and a small decrease in insulating properties.

### Means for Solving the Invention

The invention relates to a flame-retardant resin composition comprising:
(A) an aliphatic polyamide resin;
(B) an aromatic polyamide resin;
(C) a flame retardant containing (c1) a phosphinic acid salt represented by the following formula (I) and/or (c2) a diphosphinic acid salt represented by the following formula (II) and/or a polymer comprising at least one of these (c1) and (c2) as a component C1 and containing (c3) a melamine condensation product and/or (c4) a reaction product of melamine with phosphoric acid and/or (c5) a reaction product of a melamine condensation product with phosphoric acid and/or a mixture comprising at least two of these (c3) to (c5) as a component C2; and
(D) an inorganic filler:

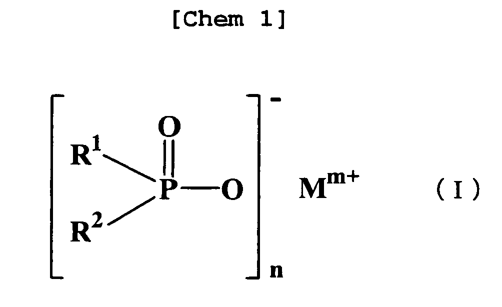

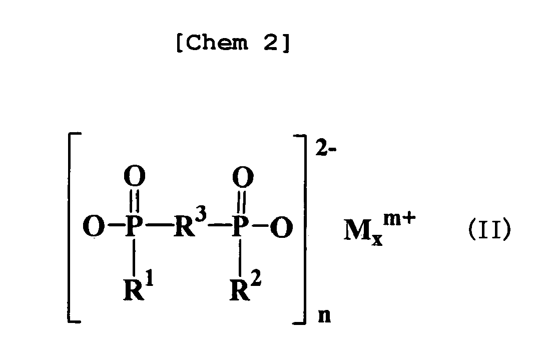

wherein R¹ and R² are the same or different and are linear or branched C₁-C₆ alkyl and/or aryl, R³ is linear or branched C₁-C₁₀ alkylene, C₆-C₁₀ arylene, C₆-C₁₀ alkylarylene, or C₆-C₁₀ arylalkylene, M is a calcium ion, a magnesium ion, an aluminum ion, and/or a zinc ion, m is 2 or 3, n is 1 or 3, and x is 1 or 2.

### Advantage of the Invention

Since the above flame-retardant resin composition is excellent in flame retardancy, excellent in safety of gases generated at combustion, and excellent in low water-absorbing property and exhibits a small dimensional change and a small decrease in insulating properties, it can be suitably used for electrical connectors and the like and is extremely useful as a non-halogen flame-retardant resin composition.

### Best Mode for Carrying Out the Invention

The aliphatic polyamide resin (A) in the invention means a polyamide containing no aromatic ring in the molecular chain, which is a polyamide wherein an aminocarboxylic acid, a lactam, or a diamine and a dicarboxylic acid are used as main starting material(s).
As the aminocarboxylic acid, there may be mentioned aminocarboxylic acids having 6 to 12 carbon atoms, and examples thereof include 6-aminocapronic acid, 7-aminoheptanoic acid, 9-aminononanoic acid, 11-aminoundecanoic acid, 12-aminododecanoic acid, and the like.
As the lactam, there may be mentioned lactams having 6 to 12 carbon atoms, and examples thereof include α-pyrrolidone, ε-caprolactam, ω-laurolactam, ε-enantholactam, and the like.

As the diamine, there may be mentioned aliphatic and alicyclic diamines, such as tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine.
As the dicarboxylic acid, there may be mentioned aliphatic and alicyclic dicarboxylic acids, such as adipic acid, glutaric acid, pimelic acid, suberic acid, azelaic acid, sebacic acid, dodecanedioic acid, and 1,4-cyclohexanedicarboxylic acid.

In the invention, polyamide homopolymers or copolymers derived from these starting materials may be used singly or in a mixture form.
As the aliphatic polyamide resin for use in the invention, particularly useful one is a polyamide resin having a melting point of 120°C or higher, which is excellent in thermal resistance and strength. Specific examples thereof include polyamide 6, polyamide 46, polyamide 66, polyamide 610, polyamide 612, polyamide 11, polyamide 12, polyamide 6/66, and mixtures thereof. As more useful one, there may be mentioned polyamide 6.

The mixing ratio of the aliphatic polyamide resin (A) for use in the invention is suitably from 30 to 80% by weight, preferably from 40 to 60% by weight relative to the whole resin composition. When the mixing ratio of the aliphatic polyamide resin (A) is less than 30% by weight, moldability is poor and satisfactory material properties are not obtained, so that the case is not preferred. When the ratio exceeds 80% by weight, a sufficient flame retardancy is not obtained, so that the case is not preferred.

The aromatic polyamide resin (B) in the invention is an aromatic polyamide resin containing at least one component of aromatic monomer components and is, for example, a polyamide resin obtained by using an aliphatic dicarboxylic acid and an aromatic diamine, or an aromatic dicarboxylic acid and an aliphatic diamine as starting materials and subjecting them to polycondensation.

As the starting aliphatic diamine and aliphatic dicarboxylic acid, those the same as in the case of the above aliphatic polyamide resins may be mentioned.
As the aromatic diamine, there may be mentioned m-xylylenediamine, p-xylylenediamine, and the like. As the aromatic dicarboxylic acid, there may be mentioned naphthalenedicarboxylic acid, terephthalic acid, isophthalic acid, phthalic acid, and the like.

Specific examples thereof include polynonamethyleneterephthalamide (polyamide 9T), polyhexamethyleneterephthalamide (polyamide 6T), polyhexamethyleneisophthalamide (polyamide 6I), polyhexamethyleneadipamide/polyhexamethyleneterephthalamide copolymer (polyamide 66/6T), polyhexamethyleneterephthalamide/polycaproamide copolymer (polyamide 6T/6), polyhexamethyleneadipamide/polyhexamethyleneisophthalamide copolymer (polyamide 66/6I), polyhexamethyleneisophthalamide/polycaproamide copolymer (polyamide 6I/6), polydodecamide/polyhexamethyleneterephthalamide copolymer (polyamide 12/6T), polyhexamethyleneadipamide/polyhexamethyleneterephthalamide/polyhexamethyleneisophthalamide copolymer (polyamide 66/6T/6I), polyhexamethyleneadipamide/polycaproamide/polyhexamethyleneisophthalamide copolymer (polyamide 66/6/6I), polyhexamethyleneterephthalamide/polyhexamethyleneisophthalamide copolymer (polyamide 6T/6I), polyhexamethyleneterephthalamide/poly(2-methylpentamethyleneterephthalamide) copolymer (polyamide 6T/M5T), polyxylyleneadipamide (polyamide MXD6), and mixtures and copolymer resins thereof.

As the aromatic polyamide resin (B) for use in the invention, particularly useful one is an amorphous partially aromatic copolymerized polyamide resin containing at least two components of aromatic monomer components. As the amorphous partially aromatic copolymerized polyamide resin, an amorphous polyamide having a glass transition temperature of 100°C or higher is preferred, the glass transition temperature being determined based on a peak temperature of loss modulus in an absolutely dry condition obtained by measuring dynamic viscoelasticity.
The "amorphous" herein means that heat of crystal melting measured on a differential scanning calorimeter (DSC) is 1 cal/g or less.

As the above amorphous partially aromatic copolymerized polyamide resin, preferred is one comprising 40 to 95% by mol of a terephthalic acid component unit and 5 to 60% by mol of an isophthalic acid component unit and an aliphatic diamine. As a preferred combination, there may be mentioned an equimolar salt of hexametylenediamine and terephthalic acid and an equimolar salt of hexamethylenediamine and isophthalic acid.
Moreover, preferred is one composed of 99 to 60% by weight of a polyamide-forming component comprising an aliphatic diamine and isophthalic acid and terephthalic acid and 1 to 40% by weight of an aliphatic polyamide component.

As the polyamide resins for use in the invention, those having a specific range of polymerization degree, i.e., relative viscosity are preferred. For the aliphatic polyamide (A), preferable relative viscosity ranges from 2.0 to 5.0, particularly preferably from 2.5 to 4.5 as a value measured in accordance with JIS K 6920. For the aromatic polyamide (B), preferable relative viscosity ranges from 1.8 to 4.5, particularly preferably from 2.0 to 4.0. When the relative viscosity is too low, material strength decreases and when the relative viscosity is too high, flowability decreases and moldability and product appearance are sometimes impaired, so that these cases are not preferred.

The mixing ratio of the aromatic polyamide resin (B) for use in the invention is suitably from 1 to 20% by weight, preferably from 2 to 10% by weight relative to the whole resin composition. When the mixing ratio of the aromatic polyamide resin (B) is less than 1% by weight, the water-absorbing property of the material increase and thus electrical properties are adversely affected, so that the case is not preferred. When the ratio exceeds 20% by weight, flowability decreases and moldability and product appearance are impaired, so that these cases are not preferred.

The flame retardant (C) in the invention contains (c1) a phosphinic acid salt represented by the following formula (I) and/or (c2) a diphosphinic acid salt represented by the following formula (II) and/or a polymer comprising at least one of these (c1) and (c2) as a component C1 and contains (c3) a melamine condensation product and/or (c4) a reaction product of melamine with phosphoric acid and/or (c5) a reaction product of a melamine condensation product with phosphoric acid and/or a mixture comprising at least two of these (c3) to (c5) as a component C2.

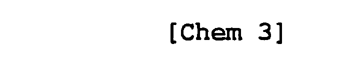

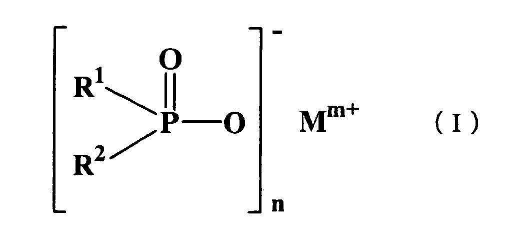

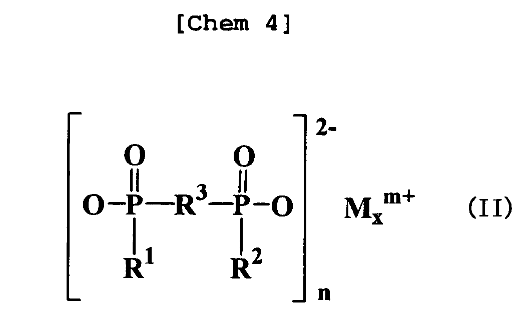

In the component C1, R¹ and R² are preferably the same or different and are linear or branched C₁-C₆ alkyl and/or aryl. Particularly preferably, they are the same or different and are methyl, ethyl, n-propyl, isopropyl, n-butyl, tert-butyl, n-pentyl, and/or phenyl.

R³ is linear or branched C₁-C₁₀ alkylene, C₆-C₁₀ arylene, C₆-C₁₀ alkylarylene, or C₆-C₁₀ arylalkylene, and is preferably methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene, or tert-butylnaphthylene, or phenylmethylene, phenylethylene, phenylpropylene, or phenylbutylene.

M is a calcium ion, a magnesium ion, an aluminum ion, and/or a zinc ion, and is preferably an aluminum ion or a zinc ion.

The term "phosphinic acid salt" used in the following includes salts of phosphinic acid and diphosphinic acid and polymers thereof.
The phosphinic acid salt is produced in an aqueous medium and is essentially a monomeric compound. Moreover, depending on the reaction conditions, polymeric phosphinic acid salts having a condensation degree of 1 to 3 are also included according to environment.
Examples of the phosphinic acid suitable as a component of the phosphinic acid salt include dimethylphosphinic acid, ethylmethylphosphinic acid, diethylphosphinic acid, isobutylmethylphosphinic acid, octylmethylphosphinic acid, methyl-n-propylphosphinic acid, methane-1,2-di(methylphosphinic acid), ethane-1,2-di(methylphosphinic acid), hexane-1,6-di(methylphosphinic acid), benzene-1,4-di(methylphosphinic acid), methylphenylphosphinic acid, and diphenylphosphinic acid.

The phosphinic acid salt of the invention can be produced by known methods, for example, a method detailed in European Patent Application Laid-Open No. 699708. In this case, the phosphinic acid is produced in an aqueous solution using a metal carbonate, a metal hydroxide, or a metal oxide.

The component C2 is preferably (c3) a melamine condensation product, more preferably melem, melam, mellon, and/or a more highly condensed product thereof or the component C2 is preferably (c4) a reaction product of melamine with phosphoric acid and/or (c5) a reaction product of a melamine condensation product with phosphoric acid or a mixture comprising at least two of these (c3) to (c5), wherein the reaction product is preferably dimelamine pyrophosphate, melamine polyphosphate, melem polyphosphate, melam polyphosphate, and/or this kind of mixed polymeric salt. Particularly preferred is melamine polyphosphate having a chain length of longer than 2, particularly longer than 10.

With regard to the mixing amount of the flame retardant (C) for use in the invention, the above components C1 and C2 are added independently from each other in an amount of suitably from 1 to 30% by weight, preferably from 3 to 20% by weight, more preferably from 3 to 15% by weight relative to the whole of the resin composition.

As the inorganic filler (D) for use in the invention, there may be mentioned fibrous inorganic materials such as glass fibers, carbon fibers, and whiskers of wollastonite and potassium titanate; inorganic fillers such as montmorillonite, talc, mica, calcium carbonate, silica, clay, kaolin, glass powder, and glass beads; and organic fillers such as various organic or polymeric powders. Preferably, glass fibers or talc are used and more preferred are glass fibers.
As the fibrous filler, the diameter of the fiber is from 0.01 to 20 µm, preferably from 0.03 to 15 µm and the cut length of the fiber is from 0.5 to 10 mm, preferably from 0.7 to 5 mm.

The mixing amount of the above inorganic filler (D) for use in the invention is from 0.5 to 50% by weight, preferably from 5 to 40% by weight, more preferably from 10 to 30% by weight relative to the whole resin composition. When the amount is less than 5% by weight, the mechanical strength of the polyamide resin is not sufficiently satisfied, so that the case is not preferred. When the amount is more than 50% by weight, mechanical strength is sufficiently satisfied but moldability and surface conditions become worse, so that the case is not preferred.

The resin composition of the invention may be used as it is as a material for electrical and electronic parts but function-imparting agents such as a heat-resistant agent, a weather-resistant agent, a crystal nucleus agent, a crystallization-accelerating agent, a release agent, a lubricant, an antistatic agent, and a colorant may be used within a range where the purpose thereof is not impaired.

A process for producing the polyamide resin composition of the invention is not particularly limited but there may be mentioned a method of blending (A) an aliphatic polyamide resin, (B) an aromatic polyamide resin, (C) a flame retardant, and (D) an inorganic filler beforehand using a mixer such as Henschel mixer, a tumbler, or a ribbon blender, charging the blend into a hopper of a uniaxial or biaxial extruder such as a screw extruder, and melt-kneading the blend or a method of blending any of the above individual components or part thereof beforehand, charging them into a hopper of a uniaxial or biaxial extruder, melting them in the extruder, and then charging the remaining components from a melting zone in the middle of the extruder, followed by melt-kneading.

Moreover, a method for molding the polyamide resin composition of the invention into electrical and/or electronic parts or the like is not particularly limited and the polyamide resin composition can be subjected to injection molding using an injection molding machine or to press molding using a press molding machine.

### 1. Components to be used

(A) Aliphatic polyamide resin
   A1: polyamide 66 (2020B manufactured by Ube Industries, Ltd.)
(B) Aromatic polyamide resin
   B1: polyamide 6I/6T (Glivory G21 manufactured by EMS-CHEMIE)
(C) Flame retardant
   C: Exolit OP1311 (TP) (manufactured by Clariant)
(D) Inorganic filler
   D1: glass fibers (ECS03T-249H manufactured by Nippon Electric Glass Co., Ltd.)
(E) Olefinic resin
   E1: ethylene/α-olefin copolymer (Tafmer MC 1307, Mitsui Chemicals, Inc.)
   E2: polyethylene (U-BOND Z488, Ube Industries, Ltd.)
(F) Other flame retardant
   F1: antimony trioxide (antimony trioxide, Mikuni Seiren K.K.)
   F2: bromine-based flame retardant (SR400A, Dai-ich Kogyo Seiyaku, Co., Ltd.)
   F3: organophosphorus-based flame retardant (PX-202, Daihachi Chemical Industry Co., Ltd.)

### 2. Production, processing, and test of flame-retardant plastic molding material

The individual components shown in Table 1 were mixed and homogenized at a temperature of 260°C to 300°C in a biaxial screw extruder (ZSK4ZSK40 manufactured by WERNER & PFLEIDERER K.K.). The homogenized polymer extruded product was taken out, cooled in a water bath, and then pelletized.

After sufficiently dried, the resulting molding material was processed at a melting temperature of 280°C to 300°C using an injection molding machine (AUTO SHOTO 100D, FANUC K.K.) to prepare a test piece, which was then tested and rated on the flame retardancy using UL94 test (Underwriters Laboratories).

### [Tensile Strength and Elongation at Break]

The properties were measured by the method in accordance with ASTM D638.

### [Flexural Strength and Flexural Modulus]

The properties were measured by the method in accordance with ASTM D790.

### [Izot Impact Strength]

The property was measured by the method in accordance with ASTM D256.

### [Heat Distortion Temperature (HDT)]

The property was measured by the method in accordance with ASTM D648.

In Table 1, the test results of the cases where the aromatic PA was added to PA66 and the flame retardant (C) was used were shown as Examples 1, 2, and 3. In addition, Comparative Examples 1 and 2 wherein the olefinic resins were used instead of the aromatic PA and Comparative Examples 3 and 4 wherein the other flame retardants were used were shown.

**[Table 1]**

| | | Example 1 | Example 2 | Example 3 | Comparative Example 1 | Comparative Example 2 | Comparative Example 3 | Comparative Example 4 |
|---|---|---|---|---|---|---|---|---|
| PA66 | A1 | 48 | 45 | 40 | 45 | 45 | 45 | 50 |
| Aromatic PA | B1 | 2 | 5 | 10 | | | 5 | |
| Flame retardant | C | 20 | 20 | 20 | 20 | 20 | | 15 |
| Glass fibers | D1 | 30 | 30 | 30 | 30 | 30 | 30 | 30 |
| Olefinic resin | E1 | | | | 5 | | | |
| Olefinic resin | E2 | | | | | 5 | | |
| Antimony trioxide | F1 | | | | | | 5 | |
| Bromine-based flame retardant | F2 | | | | | | 15 | |
| Organophosphorus-based flame retardant | F3 | | | | | | | 5 |
| Tensile strength | MPa | 145 | 147 | 147 | 125 | 130 | 150 | 152 |
| Elongation at break | % | 4 | 4 | 4 | 4 | 3 | 3 | 4 |
| Flexural strength | MPa | 210 | 215 | 210 | 175 | 175 | 220 | 204 |
| Flexural modulus | GPa | 10.0 | 10.0 | 9.9 | 9.0 | 9.5 | 9.2 | 8.9 |
| Izod impact strength | J/m | 55 | 55 | 54 | 65 | 60 | 65 | 67 |
| HDT (1.82 MPa) | °C | 248 | 245 | 230 | 247 | 250 | 235 | 243 |
| UL94 | 1/8" | V-0 | V-0 | V-0 | V-1 | V-1 | V-0 | V-0 |
| | 1/16" | V-0 | V-0 | V-0 | V-1 | V-1 | V-0 | V-0 |
| | 1/32" | V-0 | V-0 | V-0 | V-1 | V-1 | V-0 | V-0 |
| | 1/64" | V-0 | V-0 | V-0 | V-1 | V-1 | V-0 | V-1 |

It is found that the material of Example 1, 2, or 3 achieves a high flame retardant effect without largely impairing mechanical properties such as strength and impact resistance, as compared with the material of Comparative Example 1 or 2 wherein the olefinic resins are used.

Moreover, the material of Example 1, 2, or 3 has an equal effect to the flame retardant effect of the material of Comparative Example 3 or 4 wherein the formulation of the flame retardants is changed, and thus is useful as non-halogen flame retardant containing no bromine.

Dumbbell test pieces of ASTM No. 1 (thickness of 3.2 mm) were prepared from the composition of Example 3 containing the aromatic PA and the composition of Comparative Example 4 containing no aromatic PA, respectively. The test pieces were allowed to stand in a constant-temperature constant-humidity chamber at 23°C and 50%RH for a predetermined period of time and water-absorption ratios at that time were compared. The results are shown in Table 2.
The material of Example 3 exhibits a slow water-absorbing rate and also a low saturated amount of water-absorption as compared with the material of Comparative Example 4, so that the former material is useful as a material for electrical parts and the like.

**[Table 2]**

| Treating time (day) | | 1 | 5 | 10 | 50 | 100 |
|---|---|---|---|---|---|---|
| Water-absorption ratio (%) 23°C, 50%RH | Example 3 | 0.00 | 0.08 | 0.16 | 0.42 | 0.57 |
| | Comparative Example 4 | 0.09 | 0.19 | 0.26 | 0.56 | 0.73 |

While the invention has been described in detail and with reference to specific embodiments thereof, it will be apparent to one skilled in the art that various changes and modifications can be made therein without departing from the spirit and scope thereof.
This application is based on Japanese patent application filed on April 28, 2004 (Application No. 2004-132775), the contents thereof being herein incorporated by reference.

### Industrial Applicability

Since the above flame-retardant resin composition is excellent in flame retardancy, excellent in safety of gases generated at combustion, and excellent in low water-absorbing property and exhibits a small dimensional change and a small decrease in insulating properties, it can be suitably used for electrical connectors and the like and is industrially extremely useful as a non-halogen flame-retardant resin composition.

## Claims

1. A flame-retardant resin composition comprising:
(A) an aliphatic polyamide resin;
(B) an aromatic polyamide resin;
(C) a flame retardant containing (c1) a phosphinic acid salt represented by the following formula (I) and/or (c2) a diphosphinic acid salt represented by the following formula (II) and/or a polymer comprising at least one of these (c1) and (c2) as a component C1 and containing (c3) a melamine condensation product and/or (c4) a reaction product of melamine with phosphoric acid and/or (c5) a reaction product of a melamine condensation product with phosphoric acid and/or a mixture comprising at least two of these (c3) to (c5) as a component C2; and
(D) an inorganic filler: 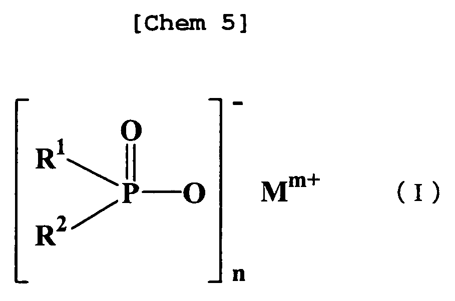 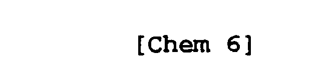 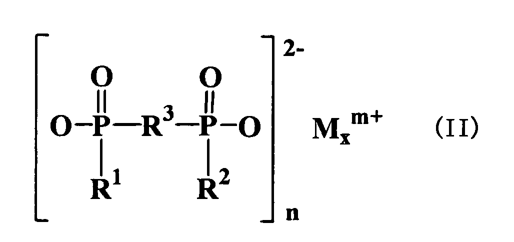
wherein R¹ and R² are the same or different and are linear or branched C₁-C₆ alkyl and/or aryl, R³ is linear or branched C₁-C₁₀ alkylene, C₆-C₁₀ arylene, C₆-C₁₀ alkylarylene, or C₆-C₁₀ arylalkylene, M is a calcium ion, a magnesium ion, an aluminum ion, and/or a zinc ion, m is 2 or 3, n is 1 or 3, and x is 1 or 2.

2. The flame-retardant resin composition according to claim 1, which comprises 30 to 80% by weight of the above aliphatic polyamide resin (A), 1 to 20% by weight of the above aromatic polyamide resin (B), 1 to 30% by weight of the component C1 and 1 to 30% by weight of the component C2 of the above flame retardant (C), and 0.5 to 50% by weight of the inorganic filler (D).

3. The flame-retardant resin composition according to claim 1 or 2, wherein the above aliphatic polyamide resin (A) is polyamide 6, polyamide 46, polyamide 66, polyamide 610, polyamide 612, polyamide 11, polyamide 12, or polyamide 6/66.

4. The flame-retardant resin composition according to any one of claims 1 to 3, wherein the above aromatic polyamide resin (B) is polyamide MXD6, polyamide 6T, polyamide 6I, polyamide 6T/6I, polyamide 66/6I, or polyamide 66/6/6I, polyamide 66/6T, polyamide 66/6T/6I.

5. A molded article obtainable by molding the flame-retardant resin composition according to any one of claims 1 to 4.
